# EUROPÄISCHE PATENTANMELDUNG

(11) **EP 0 996 303 A2**
(43) Veröffentlichungstag der Anmeldung: **26.04.2000**
(21) Anmeldenummer: 99440274.1
(22) Anmeldetag: 15.10.1999
(51) Int. Cl.: H04Q 7/32

(54) **Verbessern der Abhörsicherheit von Mobiltelefonen**

(30) Priorität: 23.10.1998 DE 19848915
(71) Anmelder: ALCATEL, 75008 Paris (FR)
(72) Erfinder: Wilhelm, Michael, 71665 Vaihingen/Enz-Kleinglattbach (DE)
(74) Vertreter: Brose, Gerhard, Dipl.-Ing.

(57) **Zusammenfassung**

Bei einem Verfahren zum Erkennen eines zwischen ein Mobiltelefon (MT) und eine Basisstation (BS2) geschalteten Abhörgeräts (IC), welches einen vom Mobiltelefon (MT) abgehenden Telefonanruf als angebliche Basisstation annimmt und dann als angebliches Mobiltelefon an die Basisstation (BS2) weiterleitet, werden Daten der vom Mobiltelefon (MT) benutzten Basisstationen (BS1,...,BS5) im Mobiltelefon (MT) gespeichert. Bei einem neuen Verbindungsaufbau mit einer Basisstation (BS2) werden die dabei neu ermittelten Daten mit den für diese Basisstation (BS2) aufgrund der gespeicherten Daten zu erwartenden Daten verglichen, wobei bei einer Abweichung der Daten ein Fehlersignal im Mobiltelefon (MT) erzeugt wird. Dieses Fehlersignal kann den Verbindungsabbruch mit dieser Basisstation (BS2) oder eine Alarmmeldung an den Benutzer auslösen. So kann die Abhörsicherheit z.B. von GSM-Mobilstationen erhöht werden.

## Beschreibung

Die Erfindung betrifft ein Verfahren zum Erkennen eines zwischen ein Mobiltelefon und eine Basisstation geschalteten Abhörgeräts, welches einen vom Mobiltelefon abgehenden Telefonanruf als angebliche Basisstation annimmt und dann als angebliches Mobiltelefon an die Basisstation weiterleitet, sowie ein entsprechendes Programmmodul zur Durchführung dieses Verfahrens und ein damit ausgestattetes Mobiltelefon.

Das Telefonieren mit digitalen Mobiltelefonen, wie sie aus dem GSM (Global System for Mobile Communications) bekannt sind, gilt als abhörsicher, da der gesamte Funkverkehr zwischen Mobiltelefon und Basisstation verschlüsselt wird. In dem in der Zeitschrift c't 1998, Heft 5, Seite 92 veröffentlichen Artikel "Mobiltelefons abhörsicher?" und in dem in der Zeitschrift FOCUS 38/1997, Seiten 220/221 veröffentlichten Artikel "Aus der Luft gegriffen" sind allerdings Abhörgeräte, sog. International Mobile Subscriber ldentity(IMSI)-Catcher beschrieben, mit denen möglicherweise Mobiltelefon-Gespräche doch abgehört werden können. Diese Abhörgeräte verhalten sich gegenüber einem Mobiltelefon wie eine Basisstation des Mobilfunknetzes. Ist das Abhörgerät der stärkste Sender in der Umgebung, benutzt das Mobiltelefon ihn beim nächsten abgehenden Telefonat als Basisstation. Da beim Verbindungsaufbau jede Basisstation bestimmen kann, wie der Funkverkehr verschlüsselt werden soll, wählt das Abhörgerät zwecks Abhörens den unverschlüsselten Modus. Da das Abhörgerät keine echte Basisstation ist, meldet es sich bei einer benachbarten Basisstation als angebliches Mobiltelefon an und reicht das abgehörte Gespräch einfach weiter, als würde es von einem Mobiltelefon geführt.

Aus der EP 0 822 726 A2 ist es bekannt, zur Erhöhung der Sicherheit in einem Funknetz die Signallaufzeit zwischen einem ortsfesten Telefon und seiner Basisstation in der Basisstation zu speichern. Weicht bei einer erneuten Verbindungsaufnahme die dabei gemessene Signallaufzeit von der gespeicherten Signallaufzeit ab, erhält das Telefon keinen Zugang zur Basisstation.

Der Erfindung liegt die Aufgabe zugrunde, ein Verfahren anzugeben, um die Zwischenschaltung des oben beschriebenen Abhörgerätes feststellen zu können, sowie ein entsprechendes Programmmodul und ein damit ausgestattetes Mobiltelefon zur Durchführung dieses Verfahrens bereitzustellen.

Diese Aufgabe wird bei dem eingangs genannten Verfahren dadurch gelöst, daß charakteristische Daten der vom Mobiltelefon benutzten Basisstationen im Mobiltelefon gespeichert werden, daß bei einem neuen Verbindungsaufbau mit einer Basisstation die dabei neu ermittelten Daten mit den für diese Basisstation aufgrund der gespeicherten Daten zu erwartenden Daten verglichen werden und daß bei einer Abweichung der Daten ein Fehlersignal im Mobiltelefon erzeugt wird.

Bei markanten Abweichungen der neu ermittelten Daten, wie sie bei einem zwischengeschalteten Abhörgerät auftreten, kann dieses Fehlersignal zu einer optischen, akustischen oder mechanischen Alarmmeldung des Mobiltelefons an den Benutzer führen, oder das Mobiltelefon wechselt auf eine andere Basisstation. Durch diese Maßnahme wird die Abhörsicherheit z.B. von GSM-Mobilstationen erhöht. Die Alarmmeldung kann auch an eine Zentrale weitergeleitet werden, z.B. für weitere Ermittlungen unter Einbindung weiterer Alarmmeldungen von anderen Mobilfunkteilnehmern, um die genaue geographische Position des Abhörgeräts festzustellen. Die charakteristischen Daten können z.B. auf einer Chipkarte des Mobiltelefons gespeichert werden.

Als charakteristische Daten können insbesondere die Signallaufzeiten oder die von der Basisstation dem Mobiltelefon vorgegebene Sendeleistung verwendet werden. Auch ein von der Basisstation gewünschter unverschlüsselter Modus kann als Auslöser für das Fehlersignal verwendet werden. Weitere Daten könnten z.B. auch die Kennung (Identität) der Funkzellen oder der Basisstationen, die Antwortzeiten auf Anfragen, die geographische Entfernung zu der Basisstation und Statistiken der mit dem Mobiltelefon geführten Anrufe sein.

Vorzugsweise werden diese charakteristischen Daten jeweils in Abhängigkeit von der Entfernung zwischen Mobiltelefon und Basisstation gespeichert, um auch für zwischenliegende Entfernungen charakteristische Daten anhand gespeicherter charakteristischer Daten interpolieren zu können.

Wenn weiterhin die charakteristischen Daten in Gruppen zu jeweils mindestens drei voneinander entfernt liegenden Basisstationen gespeichert werden, können voneinander abhängige Daten, wie z.B. die Signallaufzeiten zur jeweiligen Basisstation, erhalten werden.

Indem das Mobiltelefon eine ermittelte Abweichung zusammen mit Informationen über seine geographische Position über die Basisstation an eine Zentrale weiterleitet, kann dort, eventuell mit weiteren, von anderen Mobiltelefonen eingehenden Meldungen, die genaue geographische Position des Abhörgeräts ermittelt werden.

Die Erfindung betrifft in einem weiteren Aspekt auch die zur Durchführung des beschriebenen Verfahrens geeigneten Rechner-, Programm- und Softwaremodule.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebene Ausführungsformen sind nicht als abschließende Aufzählung zu verstehen, sondern haben vielmehr beispielhaften Charakter für die Schilderung der Erfindung.

Es zeigt:
- Fig. 1: stark schematisch ein Mobilfunknetz mit mehreren Basisstationen, einem Mobiltelefon und einem Abhörgerät;
- Fig. 2: stark schematisch den Innenaufbau des in Fig. 1 gezeigten Abhörgeräts; und
- Fig. 3: ein beispielhaftes Ablaufdiagramm für ein Verfahren, das entsprechend einem Programmmodul zum Erkennen der Anwesenheit des Abhörgeräts und zum Bestimmen dessen geographischer Position mittels des Mobiltelefons, durchgeführt wird.

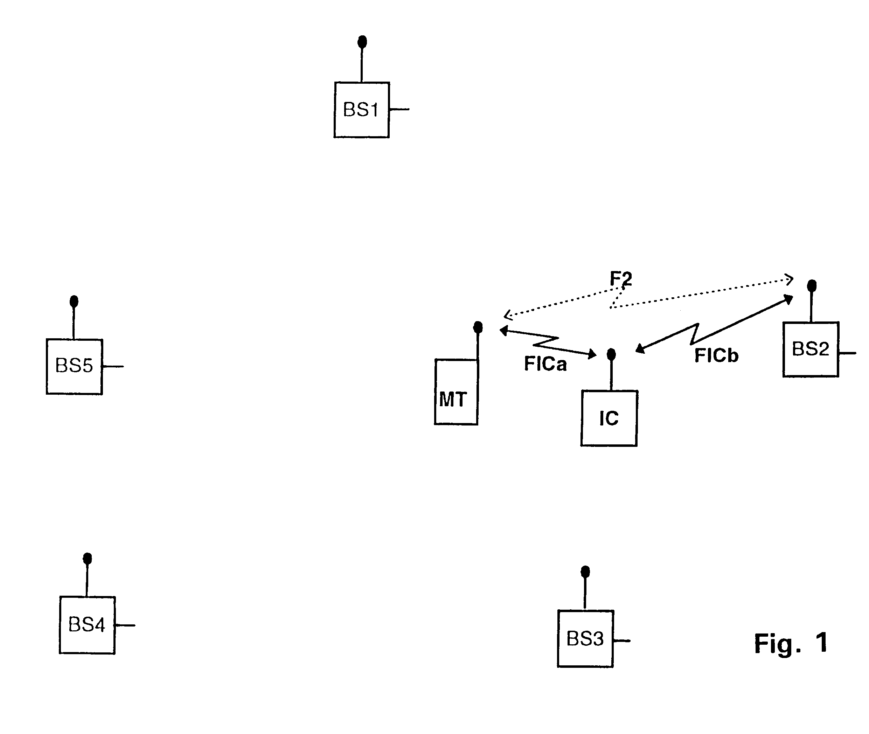

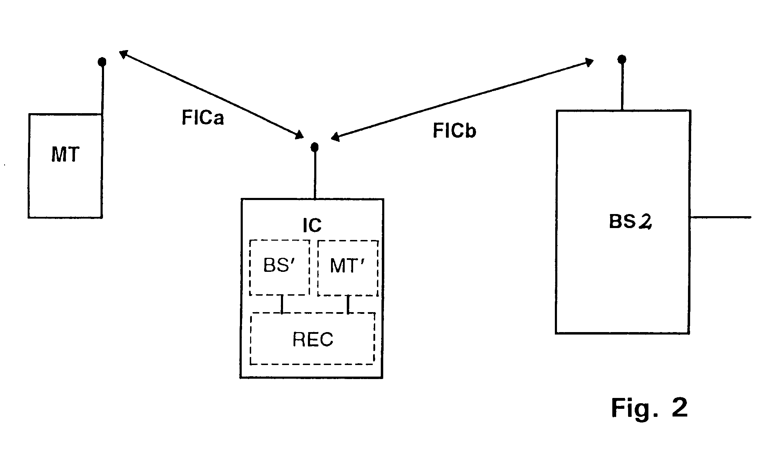

In Fig. 1 ist ein Mobilfunknetz mit mehreren Basisstationen BS1 bis BS5 gezeigt, in dem sich ein Abhörgerät IC (IMSI-Catcher) befindet. Dieses Abhörgerät IC verhält sich gegenüber einer Mobilstation bzw. einem Mobiltelefon MT wie eine Basisstation des Mobilfunknetzes. Im gezeigten Ausführungsbeispiel 1 ist angenommen, daß das Mobiltelefon MT die Basisstation BS2 als stärkste Station für den Verbindungsaufbau über die Funkstrecke F2 selektiert hätte, wenn das Abhörgerät IC nicht vorhanden bzw. aktiv wäre. Da aber nun das Abhörgerät IC der stärkste Sender in der Umgebung des Mobiltelefons MT ist, benutzt das Mobiltelefon MT ihn beim nächsten abgehenden Telefonat als vermeintliche Basisstation BS' (Fig. 2). Dazu wird die Teilstrecke FICa zum Abhörgerät IC aufgebaut. Da beim Verbindungsaufbau jede Basisstation bestimmen kann, wie der Funkverkehr verschlüsselt werden soll, wählt das Abhörgerät IC den unverschlüsselten Modus. Über eine im Abhörgerät IC vorhandene Einrichtung REC kann das Gespräch dann abgehört oder aufgezeichnet werden. Über die Teilstrecke FICb meldet sich das Abhörgerät IC bei der benachbarten Basisstation BS2 als angebliches Mobiltelefon MT' (Fig. 2) an und reicht das abgehörte Gespräch einfach weiter.

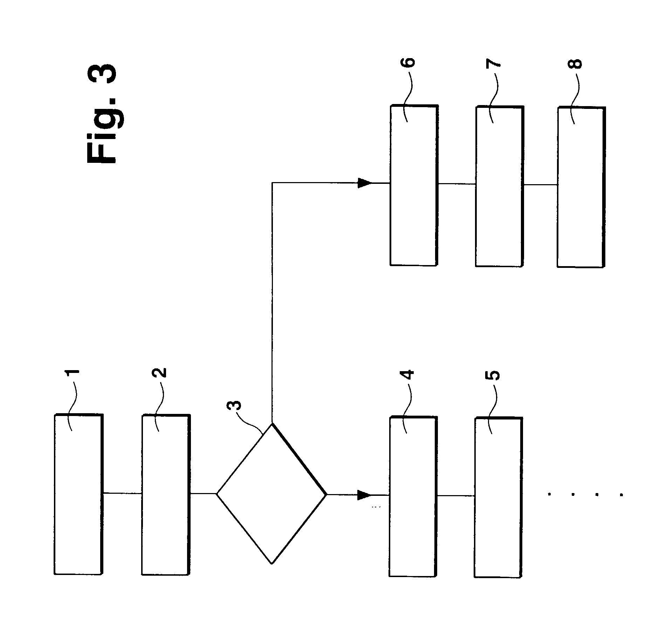

Um die Abhörsicherheit gegen ein solches Abhörgerät IC zu verbessern, ist im Mobiltelefon MT ein Rechner-, Programmoder Softwaremodul vorgesehen, das z.B. nach dem in Fig. 3 gezeigten Ablaufdiagramm arbeitet.

Nachdem die Funkverbindung zwischen Mobilstation MT und einer Basisstation aufgebaut ist (Schritt 1), werden vom Mobiltelefon MT zunächst charakteristische Daten dieser Basisstation, wie z.B. Signallaufzeiten oder die von dieser Basisstation dem Mobiltelefon MT vorgegebene Sendeleistung, ermittelt (Schritt 2). Diese neu ermittelten Daten werden im Mobiltelefon MT mit den Daten verglichen (Schritt 3), die bei früheren Verbindungen mit dieser Basisstation ermittelt und im Mobiltelefon MT gespeichert worden sind. Ergibt dieser Vergleich, daß die neu ermittelten Daten innerhalb zulässiger Bereichsgrenzen liegen, werden auch die neu ermittelten Daten im Mobiltelefon MT gespeichert (Schritt 4), und der eigentliche Verbindungsaufbau zwischen Mobiltelefon MT und Basisstation wird fortgesetzt (Schritt 5). Die im Schritt 3 verwendeten zulässigen Bereichsgrenzen können fest vorgegeben sein oder z.B. mit Hilfe statistischer Funktionen ermittelt werden.

Wird hingegen im Schritt 3 eine beträchtliche Abweichung der neu ermittelten von den gespeicherten Daten festgestellt, wird ein Fehlersignal erzeugt, und das Programm verzweigt zu Schritt 6, in welchem das Mobiltelefon MT seine geographische Position - absolut oder relativ zur Basisstation - bestimmt. Diese geographische Position wird zusammen mit der ermittelten Abweichung über diese Basisstation an eine Zentrale weiterleitet (Schritt 7). Dort kann anhand dieser Meldung und eventuell zusammen mit weiteren, von anderen Mobiltelefonen eingehenden Meldungen die genaue geographische Position des Abhörgeräts IC ermittelt werden. Das Mobiltelefon MT bricht dann die Funkverbindung zu der Basisstation ab (Schritt 8) und baut eine neue Funkverbindung zu einer anderen Basisstation auf. Es ist auch denkbar, daß der Benutzer eine Alarmmeldung erhält und danach sich entscheidet, ob er die Funkverbindung abbrechen oder aufrechterhalten will.

Im Ausführungsbeispiel der Figuren 1 und 2 sind durch das zwischengeschaltete Abhörgerät IC insbesondere die Signallaufzeiten zwischen Mobiltelefon MT und Basisstation BS2 durch die kombinierte Funkstrecke FICa und FICb deutlich erhöht. Der Vergleich mit den im Mobiltelefon MT gespeicherten kürzeren Signallaufzeiten, wie sie bei früheren Verbindungen ohne zwischengeschaltetes Abhörgerät IC ermittelt worden sind, führt daher zu einer markanten Abweichung und zum Abbruch der Verbindung.

## Patentansprüche

1. Verfahren zum Erkennen eines zwischen ein Mobiltelefon (MT) und eine Basisstation (BS2) geschalteten Abhörgeräts (IC), welches einen vom Mobiltelefon (MT) abgehenden Telefonanruf als angebliche Basisstation (BS') annimmt und dann als angebliches Mobiltelefon (MT') an die Basisstation (BS2) weiterleitet, **dadurch gekennzeichnet**, daß Daten der vom Mobiltelefon (MT) benutzten Basisstationen (BS1,...,BS5) im Mobiltelefon (MT) gespeichert werden, daß bei einem neuen Verbindungsaufbau mit einer Basisstation (BS2) die dabei neu ermittelten Daten mit den für diese Basisstation (BS2) aufgrund der gespeicherten Daten zu erwartenden Daten verglichen werden und daß bei einer Abweichung der Daten ein Fehlersignal im Mobiltelefon (MT) erzeugt wird.

2. Verfahren nach Anspruch 1, dadurch gekennzeichnet, daß
das Fehlersignal den Abbruch der Verbindung mit dieser Basisstation (BS2) auslöst.

3. Verfahren nach Anspruch 1, dadurch gekennzeichnet, daß
das Fehlersignal eine Alarmmeldung an den Benutzer auslöst.

4. Verfahren nach Anspruch 1, dadurch gekennzeichnet, daß
als Daten Signallaufzeiten und/oder die von der Basisstation (BS2) dem Mobiltelefon (MT) vorgegebene Sendeleistung und/oder der von der Basisstation (BS2) vorgegebene Verschlüsselungsmodus verwendet werden.

5. Verfahren nach Anspruch 1, dadurch gekennzeichnet, daß
die Daten die Kennungen der Funkzellen und/oder der Basisstationen enthalten.

6. Verfahren nach Anspruch 1, dadurch gekennzeichnet, daß
die Daten jeweils in Abhängigkeit von der Entfernung zwischen Mobiltelefon (MT) und Basisstation (BS2) gespeichert werden.

7. Verfahren nach Anspruch 6, dadurch gekennzeichnet, daß
die Daten in Gruppen zu jeweils mindestens drei voneinander entfernt liegenden Basisstationen gespeichert werden.

8. Verfahren nach Anspruch 1, dadurch gekennzeichnet, daß
das Mobiltelefon (MT) eine ermittelte Abweichung zusammen mit Informationen über seine geographischen Position an eine Zentrale weiterleitet.

9. Programmmodul zur Durchführung des Verfahrens nach einem der vorhergehenden Ansprüche.

10. Mobiltelefon (MT) mit prozessorgesteuerten Schaltkreisen und mit einem Programmmodul zur Durchführung des Verfahrens nach einem der vorhergehenden Ansprüche.
